# EUROPEAN PATENT SPECIFICATION

(11) **EP 3 985 547 B1**
(45) Date of publication and mention of the grant of the patent: **26.02.2025**
(21) Application number: 20202672.0
(22) Date of filing: 19.10.2020
(51) Int. Cl.: G06F 30/31, G06F 111/02

(54) **ELECTRONIC DESIGN AUTOMATION IN MULTI-TOOL DESIGN ENVIRONMENT**
ELEKTRONISCHE DESIGNAUTOMATISIERUNG IN EINER MULTI-TOOL-DESIGNUMGEBUNG
AUTOMATISATION DE CONCEPTION ÉLECTRONIQUE DANS UN ENVIRONNEMENT DE CONCEPTION UNIVERSEL MULTI-OUTILS

(43) Date of publication of application: 20.04.2022
(73) Proprietor: Luceda NV, 9200 Dendermonde (BE)
(72) Inventor: Geessels, Joris, 1000 Brussel (BE); Fiers, Martin, 9270 Laarne (BE); Dumon, Pieter, 9080 Lochristi (BE)
(74) Representative: IP HILLS NV

(56) References cited:
- US-A1- 2019 102 489
- CHAWDA PRADEEP ET AL: "A novel methodology for electronic design exchange", 2017 14TH INTERNATIONAL CONFERENCE ON SYNTHESIS, MODELING, ANALYSIS AND SIMULATION METHODS AND APPLICATIONS TO CIRCUIT DESIGN (SMACD), IEEE, 12 June 2017 (2017-06-12), pages 1 - 4, XP033121658, DOI: 10.1109/SMACD.2017.7981585
- TOGNI J D ET AL: "Tool integration using the web-services approach", GLSVLSI'05. PROCEEDINGS OF THE 2005 ACM GREAT LAKES SYMPOSIUM ON VLSI. CHICAGO, IL, APRIL 17 - 19, 2005; [GREAT LAKES SYMPOSIUM ON VLSI. (GLSVLSI)], NEW YORK, NY : ACM, US, 17 April 2005 (2005-04-17), pages 337 - 340, XP058216323, ISBN: 978-1-59593-057-6, DOI: 10.1145/1057661.1057742
- RESHADI M H ET AL: "AIRE/CE: a revision towards CAD tool integration", MICROELECTRONICS, 2000. ICM 2000. PROCEEDINGS OF THE 12TH INTERNATIONA L CONFERENCE ON OCT. 31 - NOV. 2, 2000, PISCATAWAY, NJ, USA,IEEE, 31 October 2000 (2000-10-31), pages 277 - 280, XP010538986, ISBN: 978-964-360-057-0

## Description

### Technical Field

The present invention generally relates, amongst others, to a computer-implemented method and a system for electronic design automation, EDA, in a multi-tool environment. More particularly, it relates to a computer-implemented method and a system for operating on and/or editing a computer-implemented design of an integrated circuit.

### Background

Electronic design automation, EDA, also referred to as electronic computer-aided design or ECAD, refers to a category of software tools or computer-implemented tools for designing electronic systems such as for example integrated circuits and/or printed circuit boards. Examples of such software tools are for example described in US2019/0102489A1, in the scientific publication of Chawda et al. entitled "A Novel Methodology for Electronic Design Exchange" published in the proceedings of the 2017 14th International Conference on Synthesis, Modelling, Analysis and Simulation Methods and Applications to Circuit Design, and in the scientific publication of Togni et al. entitled "Tool integration using the web-services approach" published in the proceedings of the 2005 ACM Great Lakes Symposium on VLSI. Interoperability between these different design automation tools is usually ensured by relying on automation scripts and/or unidirectional or bidirectional export/import of a proprietary or standardized file format between the design automation tools. Most existing solutions for electronic design automation are also database-based. In other words, two different design automation tools read from and/or write to a common database, such as for example the OpenAccess database, MilkyWay from Synopsys, Falcon from Mentor Graphics, etc. Interoperability between different design automation tools can also be implemented when using an inter process communication channel to allow communication between different design automation tools.

However, such existing solutions demonstrate several limitations. First, relying on automation scripts and/or unidirectional or bidirectional export/import of a proprietary or standardized file formats between the design automation tools does not allow for a transparent communication between the different tools and also considerably slows down the transfer of information between the different tools as export to/import from persistent files is required and as translation to the correct file format is necessary as well. One method which is used in existing prior art solutions to allow several design software tools to work on the same design of an integrated circuit is to transmit the design data directly in the data format or programming language of the target design software tool. This has the huge downside of being tool-specific.

Also, standard design automation databases are commonly not enough supported, or only partially supported by a limited number of electronic design automation founders. Having to rely on several design automation databases can also introduce complexity and/or instability in the design flow and render a design of an integrated circuit at best incompatible with some other electronic design automation tools and at worst completely obsolete.

Another problem is that although several design software tools use the same database such as for example the OpenAccess database to modify a single design of an integrated circuit, the evaluation of parametric cell layouts of this design requires a separate link for each of the design software tool as the database does not provide infrastructure for live communication between two different processes. Additionally, working with several design software tools on a common database at the same time can raise synchronisation and/or concurrency issues, for example if one of the design software tools writes to the database while another design software tool is not aware of this.

Serialization of data is often required when sending this data over an inter process communication channel. In computing, serialization is the process of translating a data structure or object state into a format that can be stored, such as for example in a file or memory data buffer, or transmitted such as for example across a computer network, and reconstructed later, possibly in a different computer environment. When the resulting series of bits is reread according to the serialization format, the resulting series of bits can be used to create a semantically identical clone of the original object. For many complex objects, such as those that make extensive use of references, this process is not straightforward. Serialization of object-oriented objects does not include any of their associated methods with which they were previously linked. The opposite operation, extracting a data structure from a series of bytes, is deserialization, alternatively called unserialization or unmarshalling.

The need for serialization is another limitation of existing solutions. Serialization represents a real speed bottleneck when several design automation tools communicate with each other. Speed is especially an issue if the serialization format is a text format, such as for example XML, YAML or JSON. Layout data can be relatively large, requiring a lot of text to represent it - text is a readable but very inefficient format as the number of bytes required to store a certain amount of info is high. Furthermore, when floating point numbers need to be transmitted as text, precision of the layout data will be limited. Serialization also breaks the opacity of an abstract data type by potentially exposing private implementation details. Yet, interoperability requires that applications be able to understand each other's serialization formats.

### Summary

It is thus an object of embodiments of the present invention to propose a computer-implemented method and a system which do not show the inherent shortcomings of the prior art. More specifically, it is an object of embodiments of the present invention to propose a computer-implemented method and a system to provide a communication of design data for an integrated circuit between different design tools with fast feedback or iteration, and wherein the communication of design data happens live, i.e. that two or more different design tools both active at the same time can interact, and wherein the communication of design data is transparent for a user of the system, i.e. wherein no intervention from the user is necessary between the two or more different design tools.

The scope of protection sought for various embodiments of the invention is set out by the independent claims.

The embodiments and features described in this specification that do not fall within the scope of the independent claims, if any, are to be interpreted as examples useful for understanding various embodiments of the invention.

There is a need for a computer-implemented method and a system for providing a fast and transparent interoperability between a plurality of design automation tools.

Amongst others, it is an object of embodiments of the invention to allow the use in electronic design automation of an heterogenous mix of design tools using different programming language and/or runtimes.

This object is achieved, according to a first example aspect of the present disclosure, by a computer-implemented method for electronic design automation, EDA, in a multi-tool design environment, and for interactive use by multiple design tools of a design of an integrated circuit, wherein the method comprises the steps of:
- at a first EDA tool, receiving over an inter process communication channel a request generated from a second design session native to a second EDA tool to receive design data for the design from a first design session native to the first EDA tool supporting the design data, wherein the request is implemented in a data exchange format and wherein the data exchange format is different from a second format native to the second EDA tool;
- at the first design session, generating a response in the data exchange format to the request; and
- at the first design session of the first EDA tool, directly encoding the response comprising the design data in the data exchange format and immediately writing the response in a memory buffer ready for transmission over the inter process communication channel and transmitting the response to the second EDA tool over the inter process communication channel.

The computer-implemented method according to a first example aspect of the present invention allows a fast and transparent interoperability between different design tools when designing and/or modifying design data for a design of an integrated circuit. Indeed, the computer-implemented method according to a first example aspect of the present invention provides an immediate interaction between different design tools, thereby allowing interactive use of the design of the integrated circuit by different design tools, i.e. communication between the two different design tools. Additionally, closed-loop optimization or other algorithms without user interaction that involve the different design tools becomes possible. With the computer-implemented method according to a first example aspect of the present invention, there is no need for automation scripts converting the request and/or the response so that they can be processed respectively by the first EDA tool or the second EDA tool. Export to or import from persistent files is not required anymore with the computer-implemented method according to a first example aspect of the invention. Persistent storage is thereby preferably avoided. Additionally, the computer-implemented method according to a first example aspect of the present invention provides a transparent interaction between several different design tools, thereby allowing no-clutter use of the design tools. The computer-implemented method according to a first example aspect of the present invention further makes it possible to heterogeneously mix different design tools when designing and/or modifying a single design of an integrated circuit, wherein the different design tools use different programming languages and/or different programming language runtimes. In other words, the computer-implemented method according to a first example aspect of the present invention allows different design tools to collaborate when designing and/or creating and/or modifying a design of an integrated circuit, even if the different design tools rely on different languages and/or different runtimes. This removes any dependence on programming languages and/or programming runtimes during electronic design automation. In other words, the data exchange format according to a first example aspect of the invention is compatible with the first EDA tool and with the second EDA tool. The data exchange format according to a first example aspect of the invention therefore allows an inter language communication between the first EDA tool and the second EDA tool.

The computer-implemented method according to a first example aspect of the present invention indeed minimizes, or limits, or avoids serialization or deserialization of the request and/or the response exchanged between the first EDA tool and the second EDA tool. The request and/or the response are encoded directly in a data exchange format which is immediately transmitted respectively to the first EDA tool and to the second EDA tool, thereby greatly saving time for the communication between the first EDA tool and the second EDA tool. The request and/or the response are encoded directly in a data exchange format which is written immediately in a memory buffer ready for transmission over the IPC link, without further encoding or decoding steps and without further data copy steps, e.g. without further decoding/encoding such as for example encoding to UTF-8 or ASCII, and e.g. without or with little further copying of memory blocks. Additionally, not all of the design data needs to be generated by the first design session before starting transmission to the second EDA tool: one or more parts of the design data which are already available can already be transmitted to the second EDA tool. In other words, the request and/or the response are readable and writable directly from a wide range of programming languages and are not implemented in any tool-specific programming language. For example, with the computer-implemented method according to a first example aspect of the present invention, it becomes possible to exchange design data for an integrated circuit between a first EDA tool relying on for example Python 2.7 runtime and a second EDA tool relying on for example Python 2.6 runtime while Python 2.7 runtime and Python 2.6 runtime are mutually incompatible within a single process. Additionally, with the computer-implemented method according to a first example aspect of the present invention, it also becomes possible to exchange design data for an integrated circuit between a first EDA tool relying for example on Python 2.7 runtime and second EDA tool relying on for example Python 3 runtime. Additionally, with the computer-implemented method according to a first example aspect of the present invention, it also becomes possible to exchange design data for an integrated circuit between a first EDA tool relying for example on Python 3 runtime and second EDA tool relying on for example Python 2.6 runtime or Python 2.7 runtime. Additionally, with the computer-implemented method according to a first example aspect of the present invention, it also becomes possible to exchange design data for an integrated circuit between a first EDA tool relying for example on Python 2.7 runtime or on Python 3 runtime and second EDA tool relying on for example Cadence SKILL^{®} runtime or any other suitable Lisp dialect used as a scripting language and parameterized cells description language or Tool Command Language or TCL or Ruby, etc.

With the computer-implemented method according to the present invention, the first EDA tool receives a request at least from one second EDA tool to receive design data for a design of an integrated circuit. The first EDA tool runs a first design session native to the first EDA tool, i.e. running a language in a first format native to the first EDA tool. The first design session native to the first EDA tool either received or created design data for the design of the integrated circuit. The second EDA tool runs a second design session native to the second EDA tool. The second design session generates a request for this design data of the first design session, for example to receive this design data from the first design session, or to modify the design data in the first design session and receive the modified design data from the first design session. This request is sent over an inter process communication channel to the first design session and the request is implemented in a data exchange format different from the second format native to the second EDA tool. In other words, the first EDA tool receives a request for the design data which is not implemented in the second format native to the second EDA tool, but instead, receives a request for the design data which is implemented in a data exchange format independent from the second native format of the second EDA tool. This allows the first EDA tool to process the request for the design data from the second design session without having to interpret the request implemented in a second format native to the second EDA tool, i.e. without needing knowledge on the second format native to the second EDA tool and without even knowing which tool the second EDA tool is, and also without having to convert the request for the design data from a second format native to the second EDA tool to a first format native to the first EDA tool. In other words, the data exchange format can directly be interpreted by the first EDA tool and a request implemented in a data exchange format can directly be processed by the first EDA tool without having to parse and/or unpack the request, and without having to allocate extra storage capacity such as memory in the first EDA tool to do so. Optionally, the data exchange format is different from a first format native to the first EDA tool. Alternatively, the data exchange format is a first format native to the first EDA tool.

In response to the request, the first design session supporting the design data corresponding to the request of the second EDA tool generates a response in the data exchange format. In other words, the response is therefore implemented directly in the data exchange format by the first design session. The response is not implemented in a first format native to the first EDA tool to then be converted into the data exchange format. On the contrary, the first design session directly writes the response to the request on the inter process communication channel to send the response to the second EDA tool.

For example, the computer-implemented method according to a first example aspect of the present invention provides a fast and transparent interoperability between different design tools developed for photonics design and also between design tools developed for photonics design and for electronic design. Alternatively, the computer-implemented method provides a fast and transparent interoperability between netlist and/or layout data for the design of the integrated circuit, wherein netlist refers to a circuit representation at the level of individual components, and other simple functions. The netlist will also specify the connections between the various components. A component-level netlist refers to a circuit representation at the level of individual components. In the context of the present disclosure, layout data is used for manufacturing the integrated circuit and/or for inspection and verifying the design of the integrated circuit. Layout data for example comprises one or more of the following: one or more geometrical drawings of the individual components, one or more layers of the design of the integrated circuit, design rules which must be fulfilled by the design of the integrated circuit, information indicative for inspection and verification of the design of the integrated circuit, either manually or automatically.

In the context of the present invention, electronic design automation, also referred to as electronic computer-aided design or ECAD, refers to a category of software tools or computer-implemented tools for designing electronic systems such as for example integrated circuits and/or printed circuit boards. The tools work together in a design flow that chip designers use to design and analyse entire semiconductor chips. EDA tools focus for example on one or more of the following: the design of integrated circuits, simulations of the integrated circuits such as for example electrical simulations and/or electromagnetic simulations, analysis and verifications, manufacturing preparations, functional safety, etc. The term "automation" refers to the ability for end-users to augment, customize, and drive the capabilities of electronic and photonic design and verification tools by means of a scripting language and associated support utilities. The term "automation" further refers to the ability for end-users to automate tasks by means of computer algorithms instead of the user having to execute the same task by hand. The benefits are not only speed but most importantly reproducibility by removing human error. There are a wide variety of programming languages available for electronic design automation, such as for example traditional C and its object-oriented offspring, C++, Python, TCL, Cadence SKILL^{®}, SystemC, VHDL, verilog, Java, etc.

In the context of the present invention, an integrated circuit or monolithic integrated circuit, also referred to as an IC, a chip, or a microchip, is a set of electronic circuits and/or photonics circuits and/or microelectromechanical circuits, on one small flat piece of semiconductor material that is for example silicon. The integration of large numbers of small electronic, photonic, MEMs components such as for example transistors and/or waveguides, into a small chip results in circuits that are orders of magnitude smaller, faster, and less expensive than those constructed of discrete components.

In the context of the present invention, the first EDA tool is for example a first EDA software tool. The first EDA tool is for example used to design and verify integrated circuits, printed circuit boards, and electronic systems. The first EDA tool is for example a computer-aided drafting interactive tool for integrated circuit layout and/or for integrated circuit simulation, etc. In the context of the present invention, the second EDA tool is for example a second EDA software tool different from the first EDA tool. The second EDA tool is for example used to design and verify integrated circuits, printed circuit boards, and electronic systems. The second EDA tool is for example a computer-aided drafting interactive tool for integrated circuit layout and/or for integrated circuit simulation, etc., to perform a similar operation than the first EDA tool or to perform a different operation than the first EDA tool. The first EDA tool and the second EDA tool may be implemented in the same computer environment, for example in one or more computers within the same network system or may even be implemented in for example the same computer. Alternatively, the first EDA tool and the second EDA tool can run on computers at two different physical locations remotely communicating via an inter process communication channel. Alternatively, the first EDA tool and/or the second EDA tool can for example be running on one or more virtual machines.

In the context of the present invention, the inter process communication channel, also referred to as IPC channel, refers specifically to the mechanisms an operating system provides to allow the processes to manage shared data. The first EDA tool and the second EDA tool use the inter process communication channel, for example categorized as clients and servers, where the client, for example the second EDA tool, requests data to the first EDA tool and the server, for example the first EDA tool, responds to client requests. In the context of the present invention, the request of the second EDA tool and the response of the first EDA tool are transmitted or sent over the inter process communication channel established between the first EDA tool and the second EDA tool. Additionally, the control plane for the communication between the first EDA tool and the second EDA tool is also implemented over the same inter process communication channel. The choice of relying on an inter process communication channel between the first EDA tool and the second EDA tool allows to freely chose the communication protocol. For example, HTTP or HTTP/2 can be used, thereby allowing to span from operating on the same computer to another one over a network. Alternatively, for example memory map, or mmap, can be used which is usually limited within one computer, and to specific operating systems and EDA tools, but avoids any communication overhead by directly putting the buffer with the design data from the first EDA tool into the memory of the second EDA tool.

In the context of the present invention, a native format, in the context of software applications, refers to the in-memory format of the data which the application is designed to work with, such as for example a file format. It captures the internal reality of the program as well as is possible. Most likely this is also the default format of the application. A native file format therefore most likely has a one to one relationship with the applications features. In turn, a foreign format is not a true reflection of application internals, even though it may be supported by an application. To read a foreign file causes translation of data, this can cause data loss and further editing may prevent faithful writing back to the foreign format.

According to example embodiments, the computer-implemented method further comprises the steps of :
- at a first EDA tool, receiving over an inter process communication channel one or more additional requests from additional design sessions, wherein each additional design session is native to an additional EDA tool different from the first EDA tool and the second EDA tool, wherein each additional request requests to receive design data for a design from the first design session native to the first EDA tool supporting the design data, wherein each additional request is implemented in a data exchange format and wherein the data exchange format is different from an additional format native to each of the additional EDA tools;
- at the first design session, generating a response in the data exchange format to each additional request, wherein each response comprises the design data; and
- at the first EDA tool, transmitting each response to the respective additional EDA tool over the inter process communication channel.

This way, the computer-implemented method according to a first example aspect of the present invention allows a first EDA tool to communicate with a plurality of additional EDA tools. The different additional EDA tools can request the same design data as the second EDA tool. Alternatively, the different additional EDA tools can request design data different from the design data requested by the second EDA tool. One or more of the different additional EDA tools can request the same design data. Alternatively, all the different additional EDA tools request different design data.

According to example embodiments, the data exchange format is a binary format.

The data exchange format is for example a binary format in which file information is stored in the form of ones and zeros, or in some other suitable binary, i.e. two-state, sequence. For example, the binary format is a text format. A binary format is a more complex storage solution than for example a plain text format, but it will typically provide faster and more flexible access to the data and use up less memory.

This way, the request and/or the response are made compatible with open source design automation tools, such as for example tools relying on General Public License, or GPL, licenses, such as for example KLayout. The computer-implemented method for example further comprises the step of open sourcing the first format native to the first EDA tool with GPL or any suitable GPL compatible license, and further comprises the step of open sourcing the data exchange format. Alternatively, the second EDA tool would comprise a plugin which would be configured to generate one or more requests from the second EDA tool to the first EDA tool and further configured to process one or more respective responses from the first EDA tool into a second format native to the second EDA tool. The computer-implemented method for example further comprises the step of open sourcing this plugin of the second EDA tool.

Alternatively, in the context of a closed source solution, the second EDA tool would comprise a plugin which would be configured to generate one or more requests from the second EDA tool to the first EDA tool and further configured to process one or more respective responses from the first EDA tool into a second format native to the second EDA tool. For example, the second EDA tool comprises a closed-source 'plugin' in L-Edit which is configured to generate one or more requests from the second EDA tool to the first EDA tool and further configured to process one or more respective responses from the first EDA tool into a second format native to the second EDA tool.

According to example embodiments, the request and/or the response is implemented according to a serialization library.

The request and/or the response are implemented according to a schema-based serialization library, i.e. according to a serialization library based on a schema language. This way, information comprised in the request and/or in the response can be accessed directly without parsing/unpacking respectively the request and/or the response, while also support forwards/backwards compatibility. For example, the request and/or the response are implemented according to gRPC and/or according to FlatBuffers.

According to example embodiments, the inter process communication channel supports a serialization library and a remote procedure call system.

The inter process communication channel supports a schema-based serialization library, i.e. a serialization library based on a schema language, and further supports a remote procedure call system. For example, the inter process communication channel supports gRPC with FlatBuffers.

gRPC, standing for gRPC Remote Procedure Calls, is an open source remote procedure call system which uses HTTP/2 for transport, Protocol Buffers as the interface description language, and provides features such as authentication, bidirectional streaming and flow control, blocking or nonblocking bindings, and cancellation and timeouts. gRPC generates cross-platform client and server bindings for many languages. Most common usage scenarios include connecting services in microservices style architecture and connect mobile devices, browser clients to backend services.

FlatBuffers is a free software library implementing an open-source serialization format. FlatBuffers supports zero-copy deserialization, so that accessing the serialized data does not require first copying it into a separate part of memory, which makes accessing data in these formats much faster than data in formats requiring more extensive processing. In other words, relying on FlatBuffers for the request and/or the response makes accessing the information comprised in the request and/or in the response in these formats much faster than data in formats requiring more extensive processing. FlatBuffers can be used in software written in C++, C#, C, Go, Java, JavaScript, PHP, Python, and Rust. A schema compiler for FlatBuffers runs on Android, Microsoft Windows, Mac OS X, and Linux, or any other suitable operating system. Although FlatBuffers has its own interface definition language to define the data to be serialized with it, it also supports schemas defined in the Protocol Buffers .proto format. Using FlatBuffers allows to access serialized data without parsing/unpacking. FlatBuffers represents hierarchical data in a flat binary buffer in such a way that it can still be accessed directly without parsing/unpacking, while also still supporting data structure evolution, e.g. forwards/backwards compatibility. Additionally, FlatBuffers offers memory efficiency and speed. Indeed, the only memory needed to access the data is that of the buffer. In C++ for example, it requires zero additional allocations. FlatBuffers is also very suitable for use with mmap or streaming, requiring only part of the buffer to be in memory. Access is close to the speed of raw struct access with only one extra indirection to allow for format evolution and optional fields. It is aimed at projects where spending time and space to be able to access or construct serialized data is undesirable, such as in games or any other performance sensitive applications.

According to example embodiments, the design data comprises design data for electronic components and/or for photonics components for the integrated circuit and/or for microelectromechanical systems.

In the context of the present invention, an electronic component is any basic discrete device or physical entity in an electronic system used to affect electrons or their associated fields. Electronic components have a number of electrical terminals or leads. These leads connect to other electrical components, often over wire, to create an electronic integrated circuit with a particular function, such as for example an amplifier, radio receiver, or oscillator. Basic electronic components may be packaged discretely, as arrays or networks of like components, or integrated inside of packages such as semiconductor integrated circuits, hybrid integrated circuits, or thick film devices.

A photonic integrated circuit or integrated optical circuit is a device that integrates multiple photonic functions and as such is similar to an electronic integrated circuit. A photonics component is any basic discrete device or physical entity in a photonics system used to affect photons or their associated fields. The major difference between the two is that a photonic integrated circuit provides functions for information signals imposed on optical wavelengths for example comprised in the visible spectrum or near infrared 850 nm-1650 nm. One example of material platform for photonic integrated circuits is indium phosphide, which allows for the integration of various optically active and passive functions on the same chip. Examples of photonic integrated circuits comprise two-section distributed Bragg reflector lasers, monolithic tunable lasers, widely tunable lasers, externally modulated lasers and transmitters, integrated receivers, etc. Alternatively, for example, silicon can, even though it is an indirect bandgap material, still be used to manufacture photonic integrated circuits.

Microelectromechanical systems, also referred to as MEMS, and the related micromechatronics and microsystems constitute the technology of microscopic devices, particularly those with moving parts. They merge at the nanoscale into nanoelectromechanical systems and nanotechnology. MEMS are made up of components between 1 and 100 micrometres in size, and MEMS devices generally range in size from 20 micrometres to a millimetre. They usually consist of a central unit that processes data, such as for example an integrated circuit chip such as microprocessor, and several components that interact with the surroundings.

According to example embodiments, the request comprises one or more of the following:
- a type of the electronic components and/or the photonics components and/or the microelectromechanical systems;
- one or more unidirectional and/or bidirectional inputs or outputs of the electronic components and/or the photonics components and/or for the microelectromechanical systems;
- one or more physical domains for the integrated circuit;
- one or more transformations of the electronic components and/or the photonics components and/or for the microelectromechanical systems;
- a set of parameter names and parameter values of the electronic components and/or the photonics components and/or for the microelectromechanical systems;
- a target library for the request;
- a layer identification;
- a request identification;
- one or more coordinates of the electronic components and/or the photonics components and/or for the microelectromechanical systems;
- a routing request for the electronic components and/or the photonics components and/or for the microelectromechanical systems;
- a layout evaluation request for the design data;
- a netlist for the design data;
- a table of content of the one or more requests and/or one or more requests for information about an electronic component and/or an photonics component and/or a microelectromechanical system.

A component is for example uniquely identified using a Library/Cell/View model. Cells are for example organized in Libraries and each Cell can have multiple Views, such as for example layout drawing view, simulation model view, symbolic view, etc. Optical ports for photonics components are normally bidirectional, i.e. input ports and output ports of photonics components are bidirectional. When the design data comprises design data for several different physical domains, such as for example design data for electronic components and for photonics components, or for example for electronic components and for microelectromechanical systems, each input or output and each connection between inputs and outputs has a physical domain. A routing request for example comprises one or more of the following: a numerical identification, a layer identification such as for example a layer number or purpose number, a target library, a start port, an end port, coordinates the route should go through. A layout evaluation for example comprises one or more of the following: one or more names of the Library/Cell/View to evaluate, a list of parameters, such as for example a parameter name and a parameter value for each parameter. A type in the context of the present invention is for example a transistor, such as for example a Bipolar Junction Transistors or BJT or a Field Effect Transistors FET, or is for example a photonic component, such as for example a ring, a waveguide, an Arrayed Waveguide Grating or AWG, a Multi-Mode Interferometer or MMI, etc. Alternatively, a type in the context of the present invention corresponds to a unique identifier within the Library/CellNiew model corresponding to a unique component within this model. A transformation of the electronic components and/or the photonics components and/or for the microelectromechanical systems in the context of the present invention is a process which changes the position and/or the size and/or the orientation of a component. There are four types of transformations: reflection, rotation, translation and enlargement. For example, a rotation of one or more components according to a predetermined angle, and/or a mirroring of a component according to a predetermined plane, and/or a scaling of a component according to a predetermined factor. A target library in the context of the present invention is for example a design library targeted in the first EDA tool which can be used to generate the component identifier and/or parameters values and names. A layer identification in the context of the present invention comprises a combination of names and/or numbers and a purpose, for example referred to as a layer purpose pair. For example, a combination of names and/or numbers can be metal 1/metal 2/metal 3 to refer to the different metallic layers of the design of an integrated circuit. For example, a purpose comprises a drawing and/or verification information such as for example one or more exclusion zones, and/or one or more pins. A request identification in the context of the present invention is for example relevant when a plurality of requests are sent to the first EDA tool. This way, the first EDA tool can identify which response must be sent to which request, as well as the order in which the requests must be answered. For example, the first EDA tool may respond to the first request received and continue chronologically. A layout evaluation in the context of the present invention is for example when the second EDA tool transmits a shutdown request to the first EDA tool, for example when the second EDA tool wants to inform the first EDA tool that the second EDA tool does not need the first EDA tool anymore. For example, the second EDA tool transmits such shutdown request to the first EDA tool when the second design session at the second EDA tool is terminated. A layout evaluation in the context of the present invention is for example when the second EDA tool transmits a heartbeat request to the first EDA tool to ask the first EDA tool whether the first EDA tool is still active. In the context of the present invention, netlist refers to a circuit representation at the level of individual components, and other simple functions. The netlist will also specify the connections between the various components. A component-level netlist refers to a circuit representation at the level of individual components. In the context of the present disclosure, layout data is used for manufacturing the integrated circuit and/or for inspection and verifying the design of the integrated circuit.

According to example embodiments, the response comprises the design data, wherein the design data comprises one or more of the following:
- one or more electronic components and/or the photonics components and/or for the microelectromechanical systems;
- geometric data for said one or more electronic components and/or the photonics components and/or for the microelectromechanical systems;
- one or more instances to one or more additional electronic components and/or the photonics components and/or for the microelectromechanical systems;
- a type of the electronic components and/or the photonics components and/or for the microelectromechanical systems;
- one or more ports or pins for the electronic components and/or the photonics components and/or for the microelectromechanical systems;
- one or more unidirectional and/or bidirectional inputs or outputs of the electronic components and/or the photonics components and/or for the microelectromechanical systems;
- one or more physical domains of the integrated circuit;
- one or more transformations of the electronic components and/or the photonics components and/or for the microelectromechanical systems;
- one or more fonts for one or more labels for the electronic components and/or the photonics components and/or for the microelectromechanical systems;
- a routing response for the electronic components and/or the photonics components and/or for the microelectromechanical systems.

In the context of the present invention, geometric data for example comprises polygons, rectangles, lines laid out on layers as defined above for the electronic components and/or the photonics components and/or for the microelectromechanical systems. In the context of the present invention, references or instances of one or more other cells, possibly parametrized cells. The method according to a first example aspect of the invention can transfer hierarchical design data, which is very important in an EDA context: more components are built up from simpler, already defined, components while possibly adding extra design data on top of them. A type in the context of the present invention is for example a transistor, such as for example a Bipolar Junction Transistors or BJT or a Field Effect Transistors FET, or is for example a photonic component, such as for example a ring, a waveguide, an Arrayed Waveguide Grating or AWG, a Multi-Mode Interferometer or MMI, etc. Alternatively, a type in the context of the present invention corresponds to a unique identifier within the Library/CellNiew model corresponding to a unique component within this model. A transformation of the electronic components and/or the photonics components and/or for the microelectromechanical systems in the context of the present invention is a process which changes the position and/or the size and/or the orientation of a component. There are four types of transformations: mirroring, rotation, translation and enlargement. For example, a rotation of one or more components according to a predetermined angle, and/or a mirroring of a component according to a predetermined plane, and/or a scaling of a component according to a predetermined factor. A routing response in the context of the present disclosure is for example a response to a routing request between two points A and B, wherein the routing response comprises one or more points defining a route between the two points A and B. Alternatively, the routing response in the context of the present disclosure for example comprises components and parameters, such as for example a rib waveguide and dimensions of the rib waveguide answering the routing request.

According to example embodiments, the method further comprises the steps of:
- at the first EDA tool, retrieving a first EDA template, wherein the first EDA template comprises one or more interpretation rules to interpret the data exchange format into a first format native to the first EDA tool; and
- at the first design session, interpreting the request in the data exchange format, thereby identifying the design data requested by the second design session.

The first EDA tool comprises a first EDA template. Alternatively, the first EDA tool retrieves a first EDA template comprising one or more interpretation rules from a remote location. The first EDA template is used by the first EDA tool to interpret the data exchange format of the request into a first format native to the first EDA tool. In other words, the first EDA template is used to convert or translate the request in the data exchange format into a request in a first format native to the first EDA tool. The first EDA template comprises one or more interpretation rules, wherein each interpretation rule indicates how information comprised in the request in the data exchange format corresponds to data which can be interpreted by the first EDA tool. For example, the first EDA template comprises a correspondence between a shape of a component in the data exchange format and in the first format native to the first EDA tool. For example, the first EDA template comprises a correspondence between a commando in the data exchange format and how it must be implemented in the first format native to the first EDA tool. For example, the first EDA tool comprises a first evaluator configured to retrieve the first EDA template and to interpret the request into a first format native to the first EDA tool and to transmit the request into a first format native to the first EDA tool to the first design session.

According to example embodiments, the method further comprises the steps of:
- at the first design session, generating a response to the request; and
- at the first EDA tool, retrieving the first EDA template, wherein the first EDA template comprises one or more interpretation rules to generate the response in the data exchange format.

The first EDA tool comprises a first EDA template. Alternatively, the first EDA tool retrieves a first EDA template comprising one or more interpretation rules from a remote location. The first EDA template used for interpreting the data exchange format into the first format native to the first EDA tool can be the same as the first EDA template used to generate the response in the data exchange format. Alternatively, there can exist two independent first EDA templates. The first EDA template is used by the first EDA tool to generate the response directly into the data exchange format without having to first generate the response in a first format native to the first EDA tool and then convert it into the data exchange format. The first EDA template comprises one or more interpretation rules, wherein each interpretation rule indicates how information to be comprised in the response must be implemented in the data exchange format by the first EDA tool. For example, the first EDA tool comprises a first evaluator configured to retrieve the first EDA template and to instruct the first design session on how to generate the corresponding response directly into the data exchange format.

According to example embodiments, the method further comprises the steps of:
- at the second EDA tool, receiving the response from the first EDA tool, wherein the response is implemented in the data exchange format;
- at the second EDA tool, retrieving a second EDA template, wherein the second EDA template comprises one or more conversion rules to convert the data exchange format into the second format; and
- at the second EDA tool, converting the response into the second format using the second EDA template; and
- at the second design session, interpreting the response in the second format, thereby identifying the design data.

The second EDA tool comprises a second EDA template. Alternatively, the second EDA tool retrieves a second EDA template comprising one or more interpretation rules from a remote location. The second EDA template is used by the second EDA tool to interpret the data exchange format of the response into a second format native to the second EDA tool. In other words, the second EDA template is used to convert or translate the response in the data exchange format into a response in a second format native to the second EDA tool. The second EDA template comprises one or more interpretation rules, wherein each interpretation rule indicates how information comprised in the response in the data exchange format corresponds to data which can be interpreted by the second EDA tool. For example, the second EDA template comprises a correspondence between a shape of a component in the data exchange format and in the second format native to the second EDA tool. For example, the second EDA template comprises a correspondence between a commando in the data exchange format and how it must be implemented in the second format native to the second EDA tool. For example, the second EDA tool comprises a second evaluator configured to retrieve the second EDA template and to interpret the response into a second format native to the second EDA tool.

Similarly, the second EDA template used for interpreting the data exchange format into the second format native to the first EDA tool can be the same as a second EDA template used to generate the request in the data exchange format at the side of the second EDA template. Alternatively, there can exist two independent second EDA templates. The second EDA template is used by the second EDA tool to generate the request either directly into the data exchange format without having to first generate the response in a second format native to the second EDA tool and then convert it into the data exchange format. Alternatively, the second EDA template is used by the second EDA tool to generate the request in a second format native to the second EDA tool and to convert it into a request in the data exchange format. The second EDA template comprises one or more interpretation rules, wherein each interpretation rule indicates how information to be comprised in the request must be implemented in the data exchange format by the second EDA tool. For example, the second EDA tool comprises a second evaluator configured to retrieve the second EDA template and to instruct the second design session on how to generate a request directly into the data exchange format. Alternatively, the second EDA tool comprises a second evaluator configured to retrieve the second EDA template and, upon receipt of the request from the second design session, to convert the request in a second format native to the second EDA tool into a request in the data exchange format.

According to example embodiments, the second format is OpenAccess and/or is configured to be used by a data application programming interface suitable for integrated circuit design data.

OpenAccess is a proprietary API that aims to facilitate Interoperability of electronic design automation software. OpenAccess Coalition is a coalition amongst integrated circuit manufacturers to provide a standard for designing integrated circuit chips. OpenAccess consists of a data API of which the source code is available only to coalition members. The OpenAccess API is a C++ program interface to IC design data stored in an electronic design database, with an architecture designed to ensure easy integration of contributions from various companies which may implement database enhancements or add proprietary extensions. It also includes the reference database supporting that API for IC design in multiple programming languages: C++, C#, Perl, Python, Ruby and Tcl.

According to a second example aspect, a system is disclosed, wherein the system is provided for electronic design automation, EDA, in a multi-tool design environment, and for interactive use by multiple design tools of a design of an integrated circuit, wherein the system comprises a first EDA tool supporting design data for the design and a second EDA tool, and wherein the system is configured to:
- at the second EDA tool, generate a request from a second design session native to the second EDA tool to receive design data for the design from a first design session native to the first EDA tool supporting the design data, wherein the request is implemented in a data exchange format and wherein the data exchange format is different from a second format native to the second EDA tool;
- at the second EDA tool, transmitting the request to the first EDA tool over an inter process communication channel;
- at a first EDA tool, receiving over an inter process communication channel the request;
- at the first design session, generating a response in the data exchange format to the request, wherein the response comprises the design data; and
- at the first design session of the first EDA tool, directly encoding the response comprising the design data in the data exchange format and immediately writing the response in a memory buffer ready for transmission over the inter process communication channel and transmitting the response to the second EDA tool over the inter process communication channel.

The system according to a second example aspect of the present invention allows a fast and transparent interoperability between different design tools when designing and/or modifying design data for a design of an integrated circuit. Indeed, the system according to a second example aspect of the present invention provides an immediate interaction between different design tools, thereby allowing interactive use of the design of the integrated circuit by different design tools. With the system according to a second example aspect of the present invention, there is no need for automation scripts converting the request and/or the response so that they can be processed respectively by the first EDA tool or the second EDA tool. Export to or import from persistent files is not required anymore with the computer-implemented method according to a first example aspect of the invention. Persistent storage is thereby preferably avoided. Additionally, the system according to a second example aspect of the present invention provides a transparent interaction between several different design tools, thereby allowing no-clutter use of the design tools. The system according to a second example aspect of the present invention further makes it possible to heterogeneously mix different design tools when designing and/or modifying a single design of an integrated circuit, wherein the different design tools use different programming languages and/or different programming language runtimes. In other words, the system according to a second example aspect of the present invention allows different design tools to collaborate when designing and/or modifying a design of an integrated circuit, even if the different design tools rely on different languages and/or different runtimes. This removes any dependence on programming languages and/or programming runtimes during electronic design automation. In other words, the data exchange format according to a second example aspect of the invention is compatible with the first EDA tool and with the second EDA tool. The data exchange format according to a second example aspect of the invention therefore allows an inter language communication between the first EDA tool and the second EDA tool.

The system according to a second example aspect of the present invention indeed minimizes, limits, or avoids serialization or deserialization of the request and/or the response exchanged between the first EDA tool and the second EDA tool. The request and/or the response are encoded directly in a data exchange format which can immediately be transmitted respectively to the first EDA tool and to the second EDA tool, thereby greatly saving time for the communication between the first EDA tool and the second EDA tool. In other words, the request and/or the response are readable and writable directly from a wide range of programming languages and are not implemented in any tool-specific programming language. For example, with the system according to a second example aspect of the present invention, it becomes possible to exchange design data for an integrated circuit between a first EDA tool relying on for example Python 2.7 runtime and a second EDA tool relying on for example Python 2.6 runtime. Additionally, with the system according to a second example aspect of the present invention, it also becomes possible to exchange design data for an integrated circuit between a first EDA tool relying for example on Python 2.7 runtime and second EDA tool relying on for example Python 3 runtime. Additionally, with system according to a second example aspect of the present invention, it also becomes possible to exchange design data for an integrated circuit between a first EDA tool relying for example on Python 2.7 runtime and second EDA tool relying on for example Cadence SKILL^{®} runtime or any other suitable Lisp dialect used as a scripting language and parameterized cells description language.

A first EDA tool is disclosed, wherein the first EDA tool comprises at least one processor and at least one memory including computer program code, the at least one memory and computer program code configured to, with the at least one processor, cause the first EDA tool to perform the method according to any of claims 1 to 11.

A computer program product is provided, wherein the computer program product comprises computer-executable instructions for causing a first EDA tool to perform at least the method according to any of claims 1 to 11.

A computer readable storage medium comprising computer-executable instructions for performing the method according to any of claims 1 to 11 when the program is run on a computer.

### Brief Description of the Drawings

Some example embodiments will now be described with reference to the accompanying drawings.
Fig. 1 depicts an example embodiment of a system according to the present disclosure.
Fig. 2 depicts an example embodiment of a system according to the present disclosure, wherein the system comprises two additional EDA tools.
Figs. 3A and 3B depicts an example embodiment of a system according to the present disclosure, wherein a second EDA tool requests design data to a first EDA tool.
Figs. 4A and 4B depicts an example embodiment of a system according to the present disclosure, wherein a second EDA tool requests design data for routing to a first EDA tool.
Fig. 5 shows an example embodiment of a suitable computing system for performing one or several steps in embodiments of the invention.

### Detailed Description of Embodiment(s)

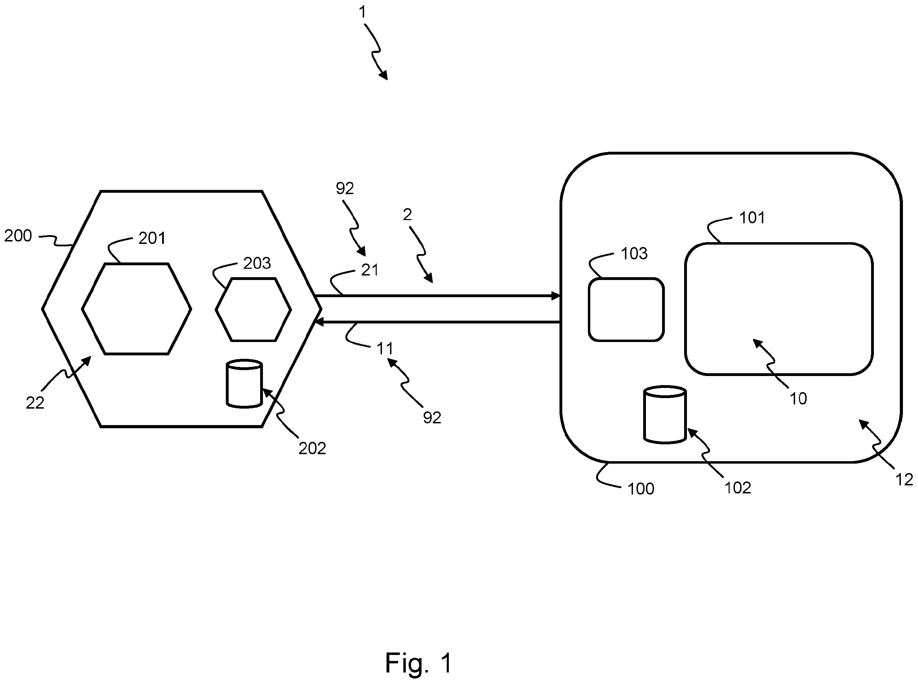

According to an example embodiment schematically depicted in Fig. 1, a system 1 comprises a first EDA tool 100 and a second EDA tool 200. The first EDA tool 100 comprises a first design session 101 which supports design data 10 for a design of an integrated circuit. The first EDA tool 100 further comprises a first EDA template 102. The second EDA tool 200 comprises a second design session 201. The second design session 201 generates a request 21 for the first design session 101 for the design data 10. The request 21 is transmitted over an inter process communication channel 2. The request 21 is implemented in a data exchange format 92 which is different from a second format 22 native to the second EDA tool 200. Upon receiving this request 21 from the second EDA tool 200 over the inter process communication channel 2, the first EDA tool 100 retrieves the design data 10 corresponding to the request 21 from the first design session 101, thereby generating a response 11 to the request 21 wherein the response 11 comprises the design data 10. The response 11 is generated in the data exchange format 92. According to an alternative example which does not fall under the scope of the claims, the response 11 is generated in a first format 12 native to the first EDA tool 100 and the first EDA tool 100 then converts the response 11 from the first format 12 into the data exchange format 92 before transmission to the second EDA tool 200 over the inter process communication channel 2. The first EDA tool 100 then transmits the response 11 to the second EDA tool over the inter process communication channel 2. Upon receipt of the response 11 at the second EDA tool 200, the second EDA tool 200 converts the response 11 from the data exchange format 92 into a second format 22 native to the second EDA tool 200, thereby interpreting the response 11 and identifying the design data 10. The first EDA tool 100 optionally comprises a first translating unit 103 configured to convert the request 21 from the second EDA tool 200 into a first format 12 native to the first EDA tool 100 based on one or more interpretation rules comprised in the first EDA template 102. The second EDA tool 200 optionally comprises a second translating unit 203 configured to convert the response 11 from the first EDA tool 100 into a second format 22 native to the second EDA tool 200 based on one or more interpretation rules comprised in the second EDA template 202.

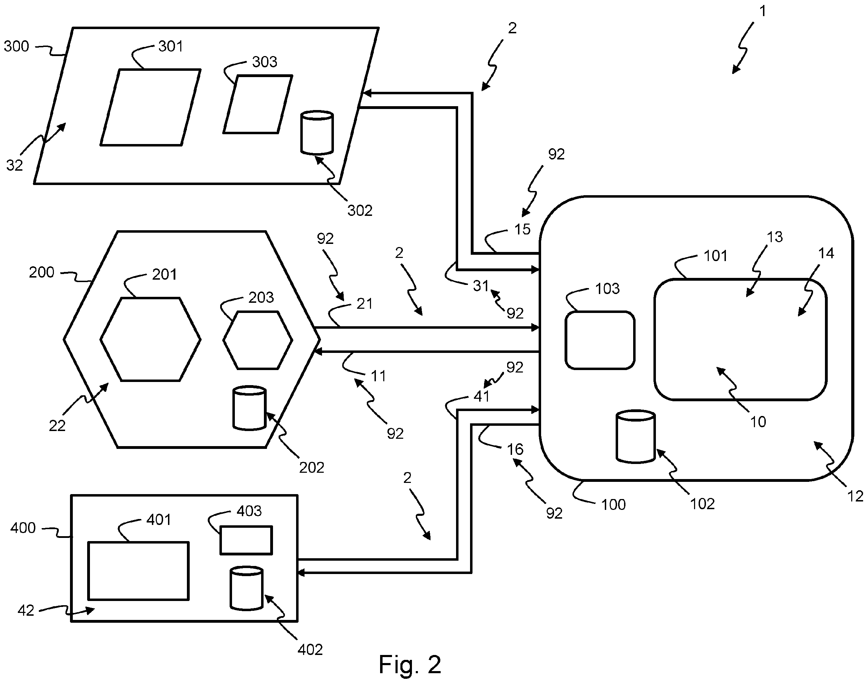

According to an example embodiment schematically depicted in Fig. 2, a system 1 comprises a first EDA tool 100 and a second EDA tool 200 and a first additional EDA tool 300 and a second additional EDA tool 400. The first EDA tool 100 comprises a first design session 101 which supports design data 10 for a design of an integrated circuit. The first EDA tool 100 further comprises a first EDA template 102. The second EDA tool 200 comprises a second design session 201. The second design session 201 generates a request 21 for the first design session 101 for the design data 10. The request 21 is transmitted over an inter process communication channel 2. The request 21 is implemented in a data exchange format 92 which is different from a second format 22 native to the second EDA tool 200. Upon receiving this request 21 from the second EDA tool 200 over the inter process communication channel 2, the first EDA tool 100 retrieves the design data 10 corresponding to the request 21 from the first design session 101, thereby generating a response 11 to the request 21 wherein the response 11 comprises the design data 10. The response 11 is generated in the data exchange format 92. According to an alternative example which does not fall under the scope of the claims, the response 11 is generated in a first format 12 native to the first EDA tool 100 and the first EDA tool 100 then converts the response 11 from the first format 12 into the data exchange format 92. The first EDA tool 100 then transmits the response 11 to the second EDA tool over the inter process communication channel 2. Upon receipt of the response 11 at the second EDA tool 200, the second EDA tool 200 converts the response 11 from the data exchange format 92 into a second format 22 native to the second EDA tool 200, thereby interpreting the response 11 and identifying the design data 10. The first additional EDA tool 300 comprises a first additional design session 301. The first additional design session 301 generates a first additional request 31 for the first design session 101 for the design data 13. The first additional request 31 is transmitted over an inter process communication channel 2. The first additional request 31 is implemented in a data exchange format 92 which is different from a first additional format 32 native to the first additional EDA tool 300. Upon receiving this first additional request 31 from the first additional EDA tool 300 over the inter process communication channel 2, the first EDA tool 100 retrieves the design data 13 corresponding to the first additional request 31 from the first design session 101, thereby generating a response 15 to the first additional request 31 wherein the response 15 comprises the design data 13. The response 15 is generated in the data exchange format 92. According to an alternative embodiment, the response 15 is generated in a first format 12 native to the first EDA tool 100 and the first EDA tool 100 then converts the response 11 from the first format 12 into the data exchange format 92 before transmission to the first additional EDA tool 300. The first EDA tool 100 then transmits the response 11 to the second EDA tool over the inter process communication channel 2. Upon receipt of the response 15 at the first additional EDA tool 300, the first additional EDA tool 300 converts the response 15 from the data exchange format 92 into a first additional format 32 native to the first additional EDA tool 300, thereby interpreting the response 15 and identifying the design data 13. The second additional EDA tool 400 comprises a second additional design session 401. The second additional design session 401 generates a second additional request 41 for the first design session 101 for the design data 14. The second additional request 41 is transmitted over an inter process communication channel 2. The second additional request 41 is implemented in a data exchange format 92 which is different from a second additional format 42 native to the second additional EDA tool 400. Upon receiving this second additional request 41 from the second additional EDA tool 400 over the inter process communication channel 2, the first EDA tool 100 retrieves the design data 14 corresponding to the second additional request 41 from the first design session 101, thereby generating a response 16 to the second additional request 41 wherein the response 16 comprises the design data 14. The response 16 is generated in the data exchange format 92. According to an alternative embodiment, the response 16 is generated in a first format 12 native to the first EDA tool 100 and the first EDA tool 100 then converts the response 11 from the first format 12 into the data exchange format 92 before transmission to the second additional EDA tool 400. The first EDA tool 100 then transmits the response 11 to the second EDA tool over the inter process communication channel 2. Upon receipt of the response 16 at the second additional EDA tool 400, the second additional EDA tool 400 converts the response 16 from the data exchange format 92 into a second additional format 42 native to the second additional EDA tool 400, thereby interpreting the response 16 and identifying the design data 14. The first EDA tool 100 optionally comprises a first translating unit 103 configured to convert the request 21 from the second EDA tool 200 into a first format 12 native to the first EDA tool 100 based on one or more interpretation rules comprised in the first EDA template 102. The second EDA tool 200 optionally comprises a second translating unit 203 configured to convert the response 11 from the first EDA tool 100 into a second format 22 native to the second EDA tool 200 based on one or more interpretation rules comprised in the second EDA template 202. The first additional EDA tool 300 optionally comprises a first additional translating unit 303 configured to convert the response 15 from the first EDA tool 100 into a first additional format 32 native to the first additional EDA tool 300 based on one or more interpretation rules comprised in the first additional EDA template 302. The second additional EDA tool 400 optionally comprises a second additional translating unit 403 configured to convert the response 16 from the first EDA tool 100 into a second additional format 42 native to the second additional EDA tool 400 based on one or more interpretation rules comprised in the second additional EDA template 402.

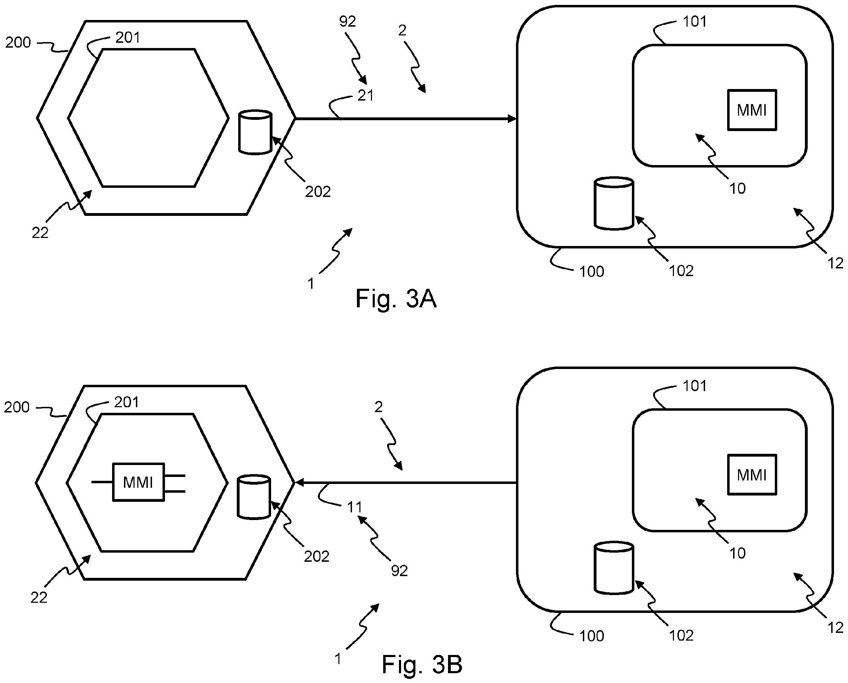

According to an example embodiment schematically depicted in Figs. 3A and 3B, a system 1 comprises a first EDA tool 100 and a second EDA tool 200. The first EDA tool 100 comprises a first design session 101 which supports design data 10 for a design of an integrated circuit. The first EDA tool 100 further comprises a first EDA template 102. The second EDA tool 200 comprises a second design session 201. The second design session 201 generates a request 21 for the first design session 101 for the design data 10. As depicted in Fig. 3A, for example, the second EDA tool 200 requests design data 10 for creating a multi-mode interferometer, MMI, in the second design session 201. The request 21 is transmitted over an inter process communication channel 2. The request 21 is implemented in a data exchange format 92 which is different from a second format 22 native to the second EDA tool 200. Upon receiving this request 21 from the second EDA tool 200 over the inter process communication channel 2, the first EDA tool 100 retrieves the design data 10 corresponding to the request 21 from the first design session 101, thereby generating a response 11 to the request 21 wherein the response 11 comprises the design data 10, i.e. comprising design data 10 for creating the MMI in the second design session 201 of the second EDA tool 200. The response 11 is generated in the data exchange format 92. According to an alternative example which does not fall under the scope of the claims, the response 11 is generated in a first format 12 native to the first EDA tool 100 and the first EDA tool 100 then converts the response 11 from the first format 12 into the data exchange format 92 before transmission to the second EDA tool 200 over the inter process communication channel 2. As depicted in Fig. 3B, the first EDA tool 100 then transmits the response 11 to the second EDA tool over the inter process communication channel 2. Upon receipt of the response 11 at the second EDA tool 200, the second EDA tool 200 converts the response 11 from the data exchange format 92 into a second format 22 native to the second EDA tool 200, thereby interpreting the response 11 and identifying the design data 10. It is then possible to create a MMI in the second design session 201. The first EDA tool 100 optionally comprises a first translating unit configured to convert the request 21 from the second EDA tool 200 into a first format 12 native to the first EDA tool 100 based on one or more interpretation rules comprised in the first EDA template 102. The second EDA tool 200 optionally comprises a second translating unit configured to convert the response 11 from the first EDA tool 100 into a second format 22 native to the second EDA tool 200 based on one or more interpretation rules comprised in the second EDA template 202.

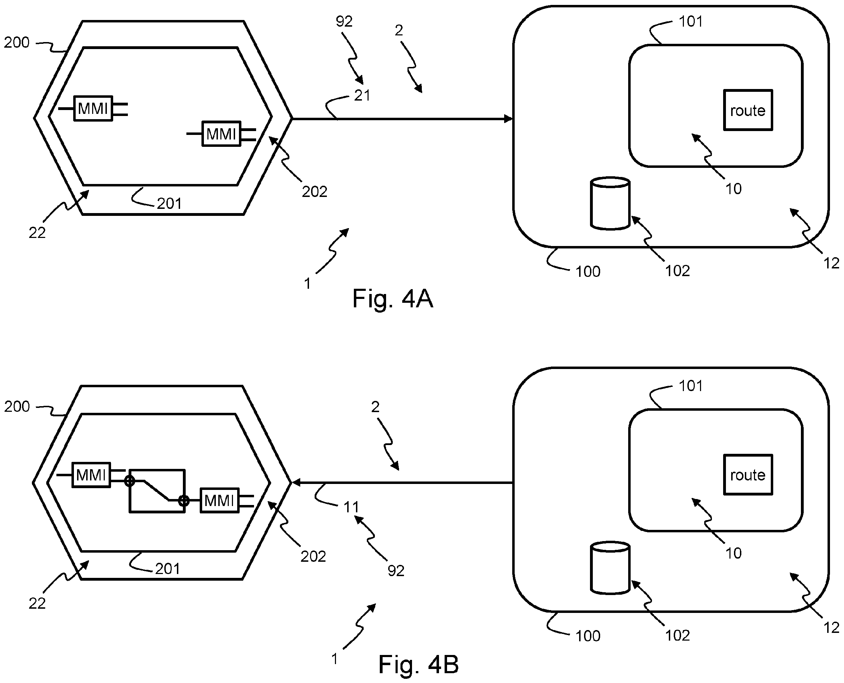

According to an example embodiment schematically depicted in Figs. 4A and 4B, a system 1 comprises a first EDA tool 100 and a second EDA tool 200. The first EDA tool 100 comprises a first design session 101 which supports design data 10 for a design of an integrated circuit. The first EDA tool 100 further comprises a first EDA template 102. The second EDA tool 200 comprises a second design session 201. The second design session 201 generates a request 21 for the first design session 101 for the design data 10. As depicted in Fig. 4A, for example, the second EDA tool 200 requests design data 10 for routing a route between two different multi-mode interferometers, MMI, in the second design session 201. The request 21 is transmitted over an inter process communication channel 2. The request 21 is implemented in a data exchange format 92 which is different from a second format 22 native to the second EDA tool 200. Upon receiving this request 21 from the second EDA tool 200 over the inter process communication channel 2, the first EDA tool 100 retrieves the design data 10 corresponding to the request 21 from the first design session 101, thereby generating a response 11 to the request 21 wherein the response 11 comprises the design data 10, i.e. comprising design data 10 for creating the MMI in the second design session 201 of the second EDA tool 200. The response 11 is generated in the data exchange format 92. According to an alternative example which does not fall under the scope of the claims, the response 11 is generated in a first format 12 native to the first EDA tool 100 and the first EDA tool 100 then converts the response 11 from the first format 12 into the data exchange format 92 before transmission to the second EDA tool 200 over the inter process communication channel 2. As depicted in Fig. 4B, the first EDA tool 100 then transmits the response 11 to the second EDA tool over the inter process communication channel 2. Upon receipt of the response 11 at the second EDA tool 200, the second EDA tool 200 converts the response 11 from the data exchange format 92 into a second format 22 native to the second EDA tool 200, thereby interpreting the response 11 and identifying the design data 10. It is then possible to route the two different MMIs in the second design session 201, for example through connecting them with a waveguide WG. The first EDA tool 100 optionally comprises a first translating unit configured to convert the request 21 from the second EDA tool 200 into a first format 12 native to the first EDA tool 100 based on one or more interpretation rules comprised in the first EDA template 102. The second EDA tool 200 optionally comprises a second translating unit configured to convert the response 11 from the first EDA tool 100 into a second format 22 native to the second EDA tool 200 based on one or more interpretation rules comprised in the second EDA template 202.

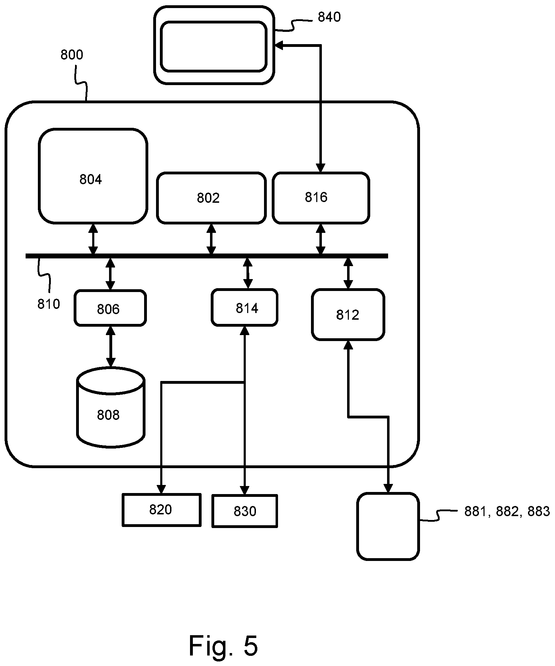

Fig. 5 shows a suitable computing system 800 enabling to implement embodiments of the system. Computing system 800 may in general be formed as a suitable general-purpose computer and comprise a bus 810, a processor 802, a local memory 804, one or more optional input interfaces 814, one or more optional output interfaces 816, a communication interface 812, a storage element interface 806, and one or more storage elements 808. Bus 810 may comprise one or more conductors that permit communication among the components of the computing system 800. Processor 802 may include any type of conventional processor or microprocessor that interprets and executes programming instructions. Local memory 804 may include a random-access memory (RAM) or another type of dynamic storage device that stores information and instructions for execution by processor 802 and/or a read only memory (ROM) or another type of static storage device that stores static information and instructions for use by processor 802. Input interface 814 may comprise one or more conventional mechanisms that permit an operator or user to input information to the computing device 800, such as a keyboard 820, a mouse 830, a pen, voice recognition and/or biometric mechanisms, a camera, etc. Output interface 816 may comprise one or more conventional mechanisms that output information to the operator or user, such as a display 840, etc. Communication interface 812 may comprise any transceiver-like mechanism such as for example one or more Ethernet interfaces that enables computing system 800 to communicate with other devices and/or systems, for example with other computing devices 881, 882, 883. The communication interface 812 of computing system 800 may be connected to such another computing system by means of a local area network (LAN) or a wide area network (WAN) such as for example the internet. Storage element interface 806 may comprise a storage interface such as for example a Serial Advanced Technology Attachment (SATA) interface or a Small Computer System Interface (SCSI) for connecting bus 810 to one or more storage elements 808, such as one or more local disks, for example SATA disk drives, and control the reading and writing of data to and/or from these storage elements 808. Although the storage element(s) 808 above is/are described as a local disk, in general any other suitable computer-readable media such as a removable magnetic disk, optical storage media such as a CD or DVD, -ROM disk, solid state drives, flash memory cards, ... could be used. Computing system 800 could thus correspond to the system 1 in the embodiment illustrated by Figs. 1 to 4B.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method for electronic design automation, EDA, in a multi-tool design environment, and for interactive use by multiple design tools of a design of an integrated circuit, wherein said method comprises the steps of:
- at a first EDA tool (100), receiving over an inter process communication channel (2) a request (21) generated from a second design session (201) native to a second EDA tool (200) to receive design data (10) for said design from a first design session (101) native to said first EDA tool (100) supporting said design data (10), wherein said request (21) is implemented in a data exchange format (92) and wherein said data exchange format (92) is different from a second format (22) native to said second EDA tool (200);
- at said first design session (101), generating a response (11) in said data exchange format (92) to said request (21), wherein said response (11) comprises said design data (10); and
- at said first design session (101) of said first EDA tool (100), directly encoding said response (11) comprising said design data (10) in said data exchange format (92) and immediately writing said response (11) in a memory buffer ready for transmission over said inter process communication channel (2) and transmitting said response (11) to said second EDA tool (200) over said inter process communication channel (2).

2. A computer-implemented method according to claim 1, wherein said data exchange format (92) is a binary format.

3. A computer-implemented method according to any of the preceding claims, wherein said request (21) and/or said response (11) is implemented according to a serialization library and/or wherein said inter process communication channel (2) supports a serialization library and a remote procedure call system.

4. A computer-implemented method according to any of the preceding claims, wherein said method further comprises the steps of:
- at said first EDA tool (100), receiving over an inter process communication channel (2) one or more additional requests (31;41) from additional design sessions (301;401), wherein each additional design session (301;401) is native to an additional EDA tool (300;400) different from said first EDA tool (100) and said second EDA tool (200), wherein each additional request (31;41) requests to receive design data (13;14) for a design from said first design session (101) native to said first EDA tool (100) supporting said design data (13;14), wherein each additional request (31;41) is implemented in said data exchange format (92) and wherein said data exchange format (92) is different from an additional format native to each of said additional EDA tools (32;42);
- at said first design session (101), generating a response (15;16) in said data exchange format (92) to each additional request (31;41), wherein each response (15;16) comprises said design data (13;14); and
- at said first EDA tool (100), transmitting each response (15;16) to said respective additional EDA tool (300;400) over the inter process communication channel (2).

5. A computer-implemented method according to any of the preceding claims, wherein said design data (10;13;14) comprises design data for electronic components and/or for photonics components for said integrated circuit and/or for microelectromechanical systems.

6. A computer-implemented method according to claim 5, wherein said request (21;31;41) comprises one or more of the following:
- a type of said electronic components and/or said photonics components;
- one or more unidirectional and/or bidirectional inputs or outputs of said electronic components and/or said photonics components and/or for said microelectromechanical systems;
- one or more physical domains for said integrated circuit;
- one or more transformations of said electronic components and/or said photonics components and/or for said microelectromechanical systems;
- a set of parameter names and parameter values of said electronic components and/or said photonics components and/or for said microelectromechanical systems;
- a target library for said request (21;31;41);
- a layer identification;
- a request identification;
- one or more coordinates of said electronic components and/or said photonics components and/or for said microelectromechanical systems;
- a routing request for said electronic components and/or said photonics components and/or for said microelectromechanical systems;
- a layout evaluation request for said design data;
- a netlist for the design data;
- a table of content of the one or more requests and/or one or more requests for information about an electronic component and/or a photonics component and/or a microelectromechanical system.

7. A computer-implemented method according to claim 5 or 6, wherein said response (11;15;16) comprises said design data (10;13;14), wherein said design data (10;13;14) comprises one or more of the following:
- one or more electronic components and/or said photonics components and/or for said microelectromechanical systems;
- geometric data for said one or more electronic components and/or said photonics components and/or for said microelectromechanical systems;
- one or more instances to one or more additional electronic components and/or said photonics components and/or for said microelectromechanical systems;
- a type of said electronic components and/or said photonics components and/or for said microelectromechanical systems;
- one or more ports or pins for said electronic components and/or said photonics components and/or for said microelectromechanical systems;
- one or more unidirectional and/or bidirectional inputs or outputs of said electronic components and/or said photonics components and/or for said microelectromechanical systems;
- one or more physical domains of said integrated circuit;
- one or more transformations of said electronic components and/or said photonics components and/or for said microelectromechanical systems;
- one or more fonts for one or more labels for said electronic components and/or said photonics components and/or for said microelectromechanical systems;
- a routing response for said electronic components and/or said photonics components and/or for said microelectromechanical systems.

8. A computer-implemented method according to any of the preceding claims, wherein said method further comprises the steps of:
- at said first EDA tool (100), retrieving a first EDA template (102), wherein said first EDA template (102) comprises one or more interpretation rules to interpret said data exchange format (92) into a first format (12) native to said first EDA tool (100); and
- at said first design session (101), interpreting said request (21;31;41) in said data exchange format (92), thereby identifying said design data (10;13;14) requested by said second design session (201).

9. A computer-implemented method according to claim 8, wherein said method further comprises the steps of:
- at said first design session (101), generating a response (11;15;16) to said request (21;31;41); and
- at said first EDA tool (100), retrieving said first EDA template (102), wherein said first EDA template (102) comprises one or more interpretation rules to generate said response (11;15;16) in said data exchange format (92).

10. A computer-implemented method according to any of the preceding claims, wherein said method further comprises the steps of:
- at said second EDA tool (200), receiving said response (11) from said first EDA tool (100), wherein said response (11) is implemented in said data exchange format (92);
- at said second EDA tool (200), retrieving a second EDA template (202), wherein said second EDA template (202) comprises one or more conversion rules to convert said data exchange format (92) into said second format (22); and
- at said second EDA tool (200), converting said response (11) into said second format (22) using said second EDA template (202); and
- at said second design session (201), interpreting said response (11) in said second format (22), thereby identifying said design data (10).

11. A computer-implemented method according to claim 10, wherein said method further comprises the step of, at said second EDA tool (200), converting said response (11) in said second format (22), wherein said second format (22) is OpenAccess and/or is configured to be used by a data application programming interface suitable for integrated circuit design data.

12. A system (1) for electronic design automation, EDA, in a multi-tool design environment, and for interactive use by multiple design tools of a design of an integrated circuit, wherein said system (1) comprises a first EDA tool (100) supporting design data (10) for said design and a second EDA tool (200), and wherein said system (1) is configured to:
- at said second EDA tool (200), generate a request (21) from a second design session (201) native to said second EDA tool (200) to receive design data (10) for said design from a first design session (101) native to said first EDA tool (100) supporting said design data (10), wherein said request (21) is implemented in a data exchange format (92) and wherein said data exchange format (92) is different from a second format (22) native to said second EDA tool (200);
- at said second EDA tool (200), transmitting said request (21) to said first EDA tool (100) over an inter process communication channel (2);
- at a first EDA tool (100), receiving over an inter process communication channel (2) said request (21);
- at said first design session (101), generating a response (11) in said data exchange format (92) to said request (21), wherein said response (11) comprises said design data (10); and
- at said first design session (101) of said first EDA tool (100), directly encoding said response (11) comprising said design data (10) in said data exchange format (92) and immediately writing said response (11) in a memory buffer ready for transmission over said inter process communication channel (2) and transmitting said response (11) to said second EDA tool (200) over said inter process communication channel (2).

13. A first EDA tool (100) comprising at least one processor and at least one memory including computer program code, the at least one memory and computer program code configured to, with the at least one processor, cause said first EDA tool (100) to perform the method according to any of claim 1 to 11.

14. A computer program product comprising computer-executable instructions for causing a first EDA tool (100) to perform at least the method according to any of claim 1 to 11.

15. A computer readable storage medium comprising computer-executable instructions for performing the method according to any of claims 1 to 11 when the program is run on a computer.

## Patentansprüche

1. Computerumgesetztes Verfahren zur elektronischen Designautomatisierung, EDA, in einer Multi-Tool-Designumgebung, und für eine interaktive Verwendung durch mehrere Design-Tools eines Designs einer integrierten Schaltung, wobei das Verfahren folgende Schritte umfasst:
- an einem ersten EDA-Tool (100), Empfangen über einen Interprozess-Kommunikationskanal (2) einer Anfrage (21), die aus einer zweiten Designsitzung (201), die für ein zweites EDA-Tool (200) systemeigen ist, generiert wird, um Designdaten (10) für das Design aus einer ersten Designsitzung (101) zu empfangen, die für das erste EDA-Tool (100) systemeigen ist, das die Designdaten (10) unterstützt, wobei die Anfrage (21) in einem Datenaustauschformat (92) umgesetzt ist, und wobei das Datenaustauschformat (92) anders als ein zweites Format (22) ist, das für das zweite EDA-Tool (200) systemeigen ist;
- bei der ersten Designsitzung (101), Generieren einer Antwort (11) in dem Datenaustauschformat (92) auf die Anfrage (21), wobei die Antwort (11) die Designdaten (10) umfasst; und
- bei der ersten Designsitzung (101) des ersten EDA-Tools (100), direktes Codieren der Antwort (11), welche die Designdaten (10) umfasst, in dem Datenaustauschformat (92) und sofortiges Schreiben der Antwort (11) in einen Zwischenspeicher, der zur Sendung auf dem Interprozess-Kommunikationskanal (2) bereit ist, und Senden der Antwort (11) an das zweite EDA-Tool (200) auf dem Interprozess-Kommunikationskanal (2).

2. Computerumgesetztes Verfahren nach Anspruch 1, wobei das Datenaustauschformat (92) ein Binärformat ist.

3. Computerumgesetztes Verfahren nach einem der vorhergehenden Ansprüche, wobei die Anfrage (21) und/oder die Antwort (11) gemäß einer Serialisierungsbibliothek umgesetzt werden, und/oder wobei der Interprozess-Kommunikationskanal (2) eine Serialisierungsbibliothek und ein entferntes Prozeduraufrufsystem unterstützt.

4. Computerumgesetztes Verfahren nach einem der vorhergehenden Ansprüche, wobei das Verfahren ferner folgende Schritte umfasst:
- an dem ersten EDA-Tool (100), Empfangen über einen Interprozess-Kommunikationskanal (2) einer oder mehrerer zusätzlicher Anfragen (31; 41) von zusätzlichen Designsitzungen (301; 401), wobei jede zusätzliche Designsitzung (301; 401) für ein zusätzliches EDA-Tool (300; 400) systemeigen ist, das anders als das erste EDA-Tool (100) und das zweite EDA-Tool (200) ist, wobei jede zusätzliche Anfrage (31; 41) anfragt, Designdaten (13; 14) für ein Design aus der ersten Designsitzung (101), die für das erste EDA-Tool (100) systemeigen ist, das die Designdaten (13; 14) unterstützt, zu empfangen, wobei jede zusätzliche Anfrage (31; 41) in dem Datenaustauschformat (92) umgesetzt wird, und wobei das Datenaustauschformat (92) anders als ein zusätzliches Format ist, das für jedes der zusätzlichen EDA-Tools (32; 42) systemeigen ist;
- in der ersten Designsitzung (101), Generieren einer Antwort (15; 16) in dem Datenaustauschformat (92) auf jede zusätzliche Anfrage (31; 41), wobei jede Antwort (15; 16) die Designdaten (13; 14) umfasst; und
- an dem ersten EDA-Tool (100), Senden jeder Antwort (15; 16) an das jeweilige zusätzliche EDA-Tool (300; 400) über den Interprozess-Kommunikationskanal (2).

5. Computerumgesetztes Verfahren nach einem der vorhergehenden Ansprüche, wobei die Designdaten (10; 13; 14) Designdaten für elektronische Bauteile und/oder für photonische Bauteile für die integrierte Schaltung und/oder für mikroelektromechanische Systeme umfassen.

6. Computerumgesetztes Verfahren nach Anspruch 5, wobei die Anfrage (21; 31; 41) eines oder mehrere der folgenden Elemente umfasst:
- einen Typ der elektronischen Bauteile und/oder der photonischen Bauteile;
- einen oder mehrere unidirektionale und/oder bidirektionale Ein- oder Ausgänge der elektronischen Bauteile und/oder der photonischen Bauteile und/oder für die mikroelektromechanischen Systeme;
- eine oder mehrere physikalische Domänen für die integrierte Schaltung;
- eine oder mehrere Transformationen der elektronischen Bauteile und/oder der photonischen Bauteile und/oder für die mikroelektromechanischen Systeme;
- einen Satz von Parameternamen und Parameterwerten der elektronischen Bauteile und/oder der photonischen Bauteile und/oder für die mikroelektromechanischen Systeme;
- eine Zielbibliothek für die Anfrage (21; 31; 41);
- eine Schichtidentifizierung;
- eine Anfragenidentifizierung;
- eine oder mehrere Koordinaten der elektronischen Bauteile und/oder der photonischen Bauteile und/oder für die mikroelektromechanischen Systeme;
- eine Routing-Anfrage für die elektronischen Bauteile und/oder die photonischen Bauteile und/oder für die mikroelektromechanischen Systeme;
- eine Konfigurationsauswertungsanfrage für die Designdaten;
- Netzliste für die Designdaten;
- eine Inhaltsangabe der einen oder der mehreren Anfragen und/oder der einen oder der mehreren Anfragen nach Informationen über ein elektronisches Bauteil und/oder ein photonisches Bauteil und/oder ein mikroelektromechanisches System.

7. Computerumgesetztes Verfahren nach Anspruch 5 oder 6, wobei die Antwort (11; 15; 16) die Designdaten (10; 13; 14) umfasst, wobei die Designdaten (10; 13; 14) eines oder mehrere der folgenden Elemente umfassen:
- ein oder mehrere elektronische Bauteile und/oder die photonischen Bauteile und/oder für die mikroelektromechanischen Systeme;
- geometrische Daten für das eine oder die mehreren elektronischen Bauteile und/oder die photonischen Bauteile und/oder für die mikroelektromechanischen Systeme;
- eine oder mehrere Instanzen für ein oder mehrere zusätzliche elektronische Bauteile und/oder die photonischen Bauteile und/oder für die mikroelektromechanischen Systeme;
- einen Typ der elektronischen Bauteile und/oder der photonischen Bauteile und/oder für die mikroelektromechanischen Systeme;
- einen oder mehrere Anschlüsse oder Stifte für die elektronischen Bauteile und/oder die photonischen Bauteile und/oder für die mikroelektromechanischen Systeme;
- einen oder mehrere unidirektionale und/oder bidirektionale Ein- oder Ausgänge der elektronischen Bauteile und/oder der photonischen Bauteile und/oder für die mikroelektromechanischen Systeme;
- eine oder mehrere physikalische Domänen der integrierten Schaltung;
- eine oder mehrere Transformationen der elektronischen Bauteile und/oder der photonischen Bauteile und/oder für die mikroelektromechanischen Systeme;
- eine oder mehrere Schriftarten für ein oder mehrere Etiketten für die elektronischen Bauteile und/oder die photonischen Bauteile und/oder für die mikroelektromechanischen Systeme;
- eine Routing-Antwort für die elektronischen Bauteile und/oder die photonischen Bauteile und/oder für die mikroelektromechanischen Systeme.

8. Computerumgesetztes Verfahren nach einem der vorhergehenden Ansprüche, wobei das Verfahren ferner folgende Schritte umfasst:
- an dem ersten EDA-Tool (100), Abrufen einer ersten EDA-Vorlage (102), wobei die erste EDA-Vorlage (102) eine oder mehrere Interpretationsregeln zum Interpretieren des Datenaustauschformats (92) in einem ersten Format (12) umfasst, das für das erste EDA-Tool (100) systemeigen ist; und
- bei der ersten Designsitzung (101), Interpretieren der Anfrage (21; 31; 41) in dem Datenaustauschformat (92), wodurch die Designdaten (10; 13; 14) identifiziert werden, die von der zweiten Designsitzung (201) angefragt werden.

9. Computerumgesetztes Verfahren nach Anspruch 8, wobei das Verfahren ferner folgende Schritte umfasst:
- bei der ersten Designsitzung (101), Generieren einer Antwort (11; 15; 16) auf die Anfrage (21; 31; 41); und
- an dem ersten EDA-Tool (100), Abrufen der ersten EDA-Vorlage (102), wobei die erste EDA-Vorlage (102) eine oder mehrere Interpretationsregeln umfasst, um die Antwort (11; 15; 16) in dem Datenaustauschformat (92) zu generieren.

10. Computerumgesetztes Verfahren nach einem der vorhergehenden Ansprüche, wobei das Verfahren ferner folgende Schritte umfasst:
- an dem zweiten EDA-Tool (200), Empfangen der Antwort (11) von dem ersten EDA-Tools (100), wobei die Antwort (11) in dem Datenaustauschformat (92) umgesetzt ist;
- an dem zweiten EDA-Tool (200), Abrufen einer zweiten EDA-Vorlage (202), wobei die zweite EDA-Vorlage (202) eine oder mehrere Umwandlungsregeln umfasst, um das Datenaustauschformat (92) in das zweite Format (22) umzuwandeln; und
- an dem zweiten EDA-Tool (200), Umwandeln der Antwort (11) in das zweite Format (22) unter Verwendung der zweiten EDA-Vorlage (202); und
- bei der zweiten Designsitzung (201), Interpretieren der Antwort (11) in dem zweiten Format (22), wodurch die Designdaten (10) identifiziert werden.

11. Computerumgesetztes Verfahren nach Anspruch 10, wobei das Verfahren ferner den Schritt des Umwandelns an dem zweiten EDA-Tool (200) der Antwort (11) in dem zweiten Format (22) umfasst, wobei das zweite Format (22) OpenAccess ist und/oder dazu konfiguriert ist, um von einer Datenanwendungs-Programmierschnittstelle verwendet zu werden, die für die Designdaten der integrierten Schaltung geeignet ist.

12. System (1) zur elektronischen Designautomatisierung, EDA, in einer Multi-Tool-Designumgebung, und für eine interaktive Verwendung durch mehrere Design-Tools eines Designs einer integrierten Schaltung, wobei das System (1) ein erstes EDA-Tool (100), das Designdaten (10) für das Design unterstützt, und ein zweites EDA-Tool (200) umfasst, und wobei das System (1) konfiguriert ist zum:
- an dem zweiten EDA-Tool (200), Generieren einer Anfrage (21) aus einer zweiten Designsitzung (201), die für das zweite EDA-Tool (200) systemeigen ist, Designdaten (10) für das Design aus einer ersten Designsitzung (101), die für das erste EDA-Tool (100) systemeigen ist, das die Designdaten (10) unterstützt, zu empfangen, wobei die Anfrage (21) in einem Datenaustauschformat (92) umgesetzt wird, und wobei das Datenaustauschformat (92) anders als ein zweites Format (22) ist, das für das zweite EDA-Tool (200) systemeigen ist;
- an dem zweiten EDA-Tool (200), Senden der Anfrage (21) an das erste EDA-Tool (100) über einen Interprozess-Kommunikationskanal (2);
- an einem ersten EDA-Tool (100), Empfangen der Anfrage (21) über einen Interprozess-Kommunikationskanal (2);
- bei der ersten Designsitzung (101), Generieren einer Antwort (11) in dem Datenaustauschformat auf die Anfrage (21), wobei die Antwort (11) die Designdaten (10) umfasst; und
- in der ersten Designsitzung (101) des ersten EDA-Tools (100), direktes Codieren der Antwort (11), welche die Designdaten (10) umfasst, in dem Datenaustauschformat (92) und sofortiges Schreiben der Antwort (11) in einen Zwischenspeicher, der für die Sendung über den Interprozess-Kommunikationskanal (2) bereit ist, und Senden der Antwort (11) an das zweite EDA-Tool (200) über den Interprozess-Kommunikationskanal (2).

13. Erstes EDA-Tool (100), umfassend mindestens einen Prozessor und mindestens einen Speicher, der Computerprogrammcode umfasst, wobei der mindestens eine Speicher und der Computerprogrammcode dazu konfiguriert sind, um mit dem mindestens einen Prozessor zu bewirken, dass das erste EDA-Tool (100) das Verfahren nach einem der Ansprüche 1 bis 11 ausführt.

14. Computerprogrammprodukt, umfassend computerausführbare Anweisungen, um zu bewirken, dass ein erstes EDA-Tool (100) mindestens das Verfahren nach einem der Ansprüche 1 bis 11 ausführt.

15. Computerlesbares Speichermedium, umfassend computerausführbare Anweisungen, um das Verfahren nach einem der Ansprüche 1 bis 11 auszuführen, wenn das Programm auf einem Computer abläuft.

## Revendications

1. Procédé mis en œuvre par ordinateur pour l'automatisation de conception électronique, EDA, dans un environnement de conception multi-outil, et pour une utilisation interactive par plusieurs outils de conception d'une conception d'un circuit intégré, le procédé comprenant les étapes consistant à :
- au niveau d'un premier outil EDA (100), recevoir sur un canal de communication entre processus (2) une demande (21) générée à partir d'une deuxième session de conception (201) native à un deuxième outil EDA (200) pour recevoir des données de conception (10) pour ladite conception à partir d'une première session de conception (101) native audit premier outil EDA (100) prenant en charge lesdites données de conception (10), dans lequel ladite demande (21) est mise en œuvre dans un format d'échange de données (92), et dans lequel ledit format d'échange de données (92) est différent d'un deuxième format (22) natif audit deuxième outil EDA (200) ;
- à ladite première session de conception (101), générer une réponse (11) dans ledit format d'échange de données (92) à ladite demande (21), la réponse (11) comprenant lesdites données de conception (10) ; et
- à ladite première session de conception (101) dudit premier outil EDA (100), coder directement ladite réponse (11) comprenant lesdites données de conception (10) dans ledit format d'échange de données (92) et écrire immédiatement ladite réponse (11) dans une mémoire tampon prête à émettre sur ledit canal de communication entre processus (2), et émettre ladite réponse (11) audit deuxième outil EDA (200) sur ledit canal de communication entre processus (2).

2. Procédé mis en œuvre par ordinateur selon la revendication 1, dans lequel ledit format d'échange de données (92) est un format binaire.

3. Procédé mis en œuvre par ordinateur selon l'une quelconque des revendications précédentes, dans lequel ladite demande (21) et/ou ladite réponse (11) sont mises en œuvre selon une bibliothèque de sérialisation et/ou dans lequel ledit canal de communication entre processus (2) prend en charge une bibliothèque de sérialisation et un système d'appel de procédure à distance.

4. Procédé mis en œuvre par ordinateur selon l'une quelconque des revendications précédentes, dans lequel ledit procédé comprend en outre les étapes consistant à :
- au niveau dudit premier outil EDA (100), recevoir sur un canal de communication entre processus (2) une ou plusieurs demandes supplémentaires (31 ; 41) à partir de sessions de conception supplémentaires (301 ; 401), chaque session de conception supplémentaire (301 ; 401) étant native à un outil EDA supplémentaire (300 ; 400) différent dudit premier outil EDA (100) et dudit deuxième outil EDA (200), dans lequel chaque demande supplémentaire (31 ; 41) demande à recevoir des données de conception (13 ; 14) pour une conception provenant de ladite première session de conception (101) native audit premier outil EDA (100) prenant en charge lesdites données de conception (13 ; 14), dans lequel chaque demande supplémentaire (31 ; 41) est mise en œuvre dans ledit format d'échange de données (92) et dans lequel ledit format d'échange de données (92) est différent d'un format supplémentaire natif à chacun des outils EDA supplémentaires (32 ; 42) ;
- à ladite première session de conception (101), générer une réponse (15 ; 16) dans ledit format d'échange de données (92) à chaque demande supplémentaire (31 ; 41), chaque réponse (15 ; 16) comprenant lesdites données de conception (13 ; 14) ; et
- au niveau dudit premier outil EDA (100), émettre chaque réponse (15 ; 16) audit outil EDA supplémentaire (300 ; 400) respectif sur le canal de communication entre processus (2).

5. Procédé mis en œuvre par ordinateur selon l'une quelconque des revendications précédentes, dans lequel lesdites données de conception (10 ; 13 ; 14) comprennent des données de conception pour des composants électroniques et/ou des composants photoniques pour ledit circuit intégré et/ou pour des systèmes microélectromécaniques.

6. Procédé mis en œuvre par ordinateur selon la revendication 5, dans lequel ladite demande (21 ; 31 ; 41) comprend un ou plusieurs des éléments suivants :
- un type desdits composants électroniques et/ou desdits composants photoniques ;
- une ou plusieurs entrées ou sorties unidirectionnelles et/ou bidirectionnelles desdits composants électroniques et/ou des composants photoniques et/ou pour lesdits systèmes microélectromécaniques ;
- un ou plusieurs domaines physiques pour ledit circuit intégré ;
- une ou plusieurs transformations desdits composants électroniques et/ou desdits composants photoniques et/ou pour lesdits systèmes microélectromécaniques ;
- un jeu de noms de paramètre et de valeurs de paramètre desdits composants électroniques et/ou desdits composants photoniques et/ou pour lesdits systèmes microélectromécaniques ;
- une bibliothèque cible pour ladite demande (21 ; 31 ; 41) ;
- une identification de couche ;
- une identification de demande ;
- une ou plusieurs coordonnées desdits composants électroniques et/ou desdits composants photoniques et/ou pour lesdits systèmes microélectromécaniques ;
- une demande de routage pour lesdits composants électroniques et/ou lesdits composants photoniques et/ou pour lesdits systèmes microélectromécaniques ;
- une demande d'évaluation de configuration pour lesdites données de conception ;
- une netlist pour les données de conception ;
- un sommaire de ladite une ou des plusieurs demandes et/ou ladite une ou des plusieurs demandes pour des informations concernant un composant électronique et/ou un composant photonique et/ou un système microélectromécanique.

7. Procédé mis en œuvre par ordinateur selon la revendication 5 ou 6, dans lequel ladite réponse (11 ; 15 ; 16) comprend lesdites données de conception (10 ; 13 ; 14), lesdites données de conception (10 ; 13 ; 14) comprenant un ou plusieurs des éléments suivants :
- un ou plusieurs composants électroniques et/ou lesdits composants photoniques et/ou pour lesdits systèmes microélectromécaniques ;
- des données géométriques pour lesdits un ou plusieurs composants électroniques et/ou lesdits composants photoniques et/ou pour lesdits systèmes microélectromécaniques ;
- une ou plusieurs instances pour un ou plusieurs composants électroniques supplémentaires et/ou lesdits composants photoniques et/ou pour lesdits systèmes microélectromécaniques ;
- un type desdits composants électroniques et/ou desdits composants photoniques et/ou pour lesdits systèmes microélectromécaniques ;
- un ou plusieurs ports ou broches pour lesdits composants électroniques et/ou lesdits composants photoniques et/ou pour lesdits systèmes microélectromécaniques ;
- une ou plusieurs entrées ou sorties unidirectionnelles et/ou bidirectionnelles desdits composants électroniques et/ou desdits composants photoniques et/ou pour lesdits systèmes microélectromécaniques ;
- un ou plusieurs domaines physiques dudit circuit intégré ;
- une ou plusieurs transformations desdits composants électroniques et/ou desdits composants photoniques et/ou pour lesdits systèmes microélectromécaniques ;
- une ou plusieurs polices de caractères pour une ou plusieurs étiquettes pour lesdits composants électroniques et/ou lesdits composants photoniques et/ou pour lesdits systèmes microélectromécaniques ;
- une réponse de routage pour lesdits composants électroniques et/ou lesdits composants photoniques et/ou pour lesdits systèmes microélectromécaniques.

8. Procédé mis en œuvre par ordinateur selon l'une quelconque des revendications précédentes, ledit procédé comprenant en outre les étapes consistant à :
- au niveau dudit premier outil EDA (100), récupérer un premier modèle EDA (102), ledit premier modèle EDA (102) comprenant une ou plusieurs règles d'interprétation pour interpréter ledit format d'échange de données (92) en un premier format (12) natif audit premier outil EDA (100) ; et
- à ladite première session de conception (101), interpréter ladite demande (21 ; 31 ; 41) dans ledit format d'échange de données (92), identifiant de ce fait lesdites données de conception (10 ; 13 ; 14) demandées par ladite deuxième session de conception (201).

9. Procédé mis en œuvre par ordinateur selon la revendication 8, ledit procédé comprenant en outre les étapes consistant à :
- à ladite première session de conception (101), générer une réponse (11 ; 15 ; 16) à ladite demande (21 ; 31 ; 41) ; et
- au niveau dudit premier outil EDA (100), récupérer ledit premier modèle EDA (102), ledit premier modèle EDA (102) comprenant une ou plusieurs règles d'interprétation pour générer ladite réponse (11 ; 15 ; 16) dans ledit format d'échange de données (92).

10. Procédé mis en œuvre par ordinateur selon l'une quelconque des revendications précédentes, ledit procédé comprenant en outre les étapes consistant à :
- au niveau dudit deuxième outil EDA (200), recevoir ladite réponse (11) dudit premier outil EDA (100), ladite réponse (11) étant mis en œuvre dans ledit format d'échange de données (92) ;
- au niveau dudit deuxième outil EDA (200), récupérer un deuxième modèle EDA (202), ledit deuxième modèle EDA (202) comprenant une ou plusieurs règles de conversion pour convertir ledit format d'échange de données (92) audit deuxième format (22) ; et
- au niveau du deuxième outil EDA (200), convertir ladite réponse (11) audit deuxième format (22) en utilisant ledit deuxième modèle EDA (202) ; et
- à ladite deuxième session de conception (201), interpréter ladite réponse (11) dans ledit deuxième format (22) identifiant de ce fait lesdites données de conception (10).

11. Procédé mis en œuvre par ordinateur selon la revendication 10, ledit procédé comprenant en outre l'étape consistant à convertir, au niveau dudit deuxième outil EDA (200), la réponse (11) dans ledit deuxième format (22), ledit deuxième format (22) étant OpenAccess et/ou étant configuré pour être utilisé par une interface de programmation d'application de données adaptée pour des données de conception de circuit intégré.

12. Système (1) pour l'automatisation de conception électronique, EDA, dans un environnement de conception multi-outil, et pour une utilisation interactive par plusieurs outils de conception d'une conception d'un circuit intégré, dans lequel ledit système (1) comprend un premier outil EDA (100) prenant en charge des données de conception (10) pour ladite conception et un deuxième outil EDA (200), et dans lequel ledit système (1) est configuré pour :
- au niveau dudit deuxième outil EDA (200), générer une demande (21) à partir d'une deuxième session de conception (201) native audit deuxième outil EDA (200) pour recevoir des données de conception (10) pour ladite conception à partir d'une première session de conception (101) native audit premier outil EDA (100) prenant en charge lesdites données de conception (10), dans lequel ladite demande (21) est mise en œuvre dans un format d'échange de données (92) et dans lequel ledit format d'échange de données (92) est différent d'un deuxième format (22) natif audit deuxième outil EDA (200) ;
- au niveau dudit deuxième outil EDA (200), émettre ladite demande (21) audit premier outil EDA (100) sur un canal de communication entre processus (2) ;
- au niveau d'un premier outil EDA (100), recevoir ladite demande (21) sur un canal de communication entre processus (2) ;
- à ladite première session de conception (101), générer une réponse (11) dans ledit format d'échange de données à ladite demande (21), dans lequel ladite réponse (11) comprend lesdites données de conception (10) ; et
- à ladite première session de conception (101) dudit premier outil EDA (100), coder directement ladite réponse (11) comprenant lesdites données de conception (10) dans ledit format d'échange de données (92) et écrire immédiatement ladite réponse (11) dans une mémoire tampon prête à émettre sur ledit canal de communication entre processus (2), et émettre ladite réponse (11) audit deuxième outil EDA (200) sur ledit canal de communication entre processus (2).

13. Premier outil EDA (100) comprenant au moins un processeur et au moins une mémoire comprenant du code programme informatique, ladite au moins une mémoire et ledit code programme informatique étant configurés pour faire à l'aide dudit au moins un processeur que ledit premier outil EDA (100) effectue le procédé selon l'une quelconque des revendications 1 à 11.

14. Produit de programme informatique comprenant des instructions exécutables par ordinateur pour faire qu'un premier outil EDA (100) effectue au moins le procédé selon l'une quelconque des revendications 1 à 11.

15. Support de stockage lisible par ordinateur, comprenant des instructions exécutables par ordinateur pour effectuer le procédé selon l'une quelconque des revendications 1 à 11 lorsque le programme s'exécute sur un ordinateur.
